(19) Europäisches Patentamt
European Patent Office
Office européen des brevets

(11) **EP 4 425 603 A1**

(12) **EUROPEAN PATENT APPLICATION**

(43) Date of publication:
04.09.2024 Bulletin 2024/36

(21) Application number: 23211854.7

(22) Date of filing: 23.11.2023

(51) International Patent Classification (IPC):
*H01M 4/133* (2010.01)     *H01M 4/134* (2010.01)
*H01M 4/36* (2006.01)      *H01M 4/38* (2006.01)
*H01M 4/40* (2006.01)      *H01M 4/42* (2006.01)
*H01M 4/46* (2006.01)      *H01M 4/587* (2010.01)

(52) Cooperative Patent Classification (CPC):
H01M 4/134; H01M 4/133; H01M 4/1395;
H01M 4/36; H01M 4/362; H01M 4/364;
H01M 4/366; H01M 4/38; H01M 4/386;
H01M 4/387; H01M 4/405; H01M 4/42;
H01M 4/463; H01M 4/466; H01M 4/583;     (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 24.11.2022 KR 20220159267

(71) Applicant: **Hansol Chemical Co., Ltd**
**Seoul 06169 (KR)**

(72) Inventors:
• **SHIM, HYEONWOO**
**55321 Wanju-gun (KR)**

• **KANG, SUNGHWAN**
**55321 Wanju-gun (KR)**
• **LEE, JEONGHUN**
**55321 Wanju-gun (KR)**
• **CHOI, WOOYEONG**
**55321 Wanju-gun (KR)**
• **KWON, SEMAN**
**55321 Wanju-gun (KR)**

(74) Representative: **Script Intellectual Property LLP**
**Suite J, Anchor House**
**School Close**
**Chandlers Ford**
**Eastleigh, Hampshire SO53 4DY (GB)**

(54) **ANODE ACTIVE MATERIAL FOR LITHIUM SECONDARY BATTERY, METHOD OF PREPARING THE SAME, AND LITHIUM SECONDARY BATTERY INCLUDING THE SAME**

(57)     An anode active material for a lithium secondary battery includes a plurality of composites that each includes a core, and a first shell layer surrounding the core, and a second shell layer surrounding the plurality of composites. The composites may each include metal particles and carbon, and a distance between adjacent composites among the composites may be in a range of 80 nanometers (nm) to 300 nm.

FIG. 1

**(Cont. next page)**

EP 4 425 603 A1

(52) Cooperative Patent Classification (CPC): (Cont.)
**H01M 4/587; H01M 4/625; H01M 10/0525;**
H01M 2004/021; H01M 2004/027; Y02E 60/10

**Description**

CROSS-REFERENCE TO RELATED APPLICATION

This application claims the benefit of Korean Patent Application No. 10-2022-0159267 filed on November 24, 2022, in the Korean Intellectual Property Office, the entire disclosure of which is incorporated herein by reference for all purposes.

BACKGROUND

1. Field of the Invention

One or more embodiments relate to an anode active material for a lithium secondary battery, a method of preparing the anode active material, and a lithium secondary battery including the anode active material.

2. Description of the Related Art

Batteries are devices that convert chemical energy into electrical energy. Secondary batteries refer to batteries that are rechargeable and available after the batteries are discharged, unlike primary batteries. Among such secondary batteries, lithium secondary batteries produce electricity through a chemical reaction in which lithium ions move from an anode to a cathode during discharge.

Recently, a demand for lithium secondary batteries in the market has noticeably increased. Accordingly, as applications of lithium secondary batteries become more diverse, higher performance demands are raised. Thus, there is a demand for the higher capacity and longer lifespan of lithium secondary batteries. Currently, graphite is widely used as an anode active material. However, since the graphite exhibits a theoretical capacity of about 372 mAh/g, performance is insufficient in terms of high capacity required in the market. For a higher capacity of batteries, silicon (Si) or compounds of Si are emerging as new materials represented as materials for anode active materials.

However, there are limitations in immediately applying silicon as an anode active material. In an example, in a charging and discharging process, a structural collapse of an active material may occur due to a volumetric expansion by about 300% to about 400%, which may cause an electrical short circuit between particles in an electrode plate, thereby increasing the resistance. In another example, if silicon directly contacts an electrolyte through a damaged portion of the silicon, an oxidation reaction of the silicon may be caused, and thus, a lifespan of a battery may be drastically reduced.

Methods for compensating for such disadvantages of silicon materials have been known. In an example, a method of pulverizing primary silicon particles at a nanometer level is provided. However, since the degree of oxidation increases as the size of the primary silicon particles decreases, the initial efficiency may decrease when performance of a battery is evaluated.

In another example, a method of suppressing an expansion by forming a coating layer on an outer edge of a core including silicon particles is provided. However, if the coating layer is damaged as a charging and discharging process is repeated in the above method, all the silicon particles in the core may be simultaneously exposed to an electrolyte, which may result in a significant reduction in a lifespan of a battery.

SUMMARY

Embodiments provide an anode active material for a lithium secondary battery that may prevent a structural collapse from occurring due to a volumetric expansion of silicon during charging and discharging of a battery using an active material including silicon particles and that may prevent a lifespan of the battery from being reduced due to exposure of all the silicon particles to an electrolyte caused by a collapse of an outer shell layer.

However, goals to be achieved are not limited to those described above, and other goals not mentioned above can be clearly understood by one of ordinary skill in the art from the following description.

According to an aspect, there is provided an anode active material for a lithium secondary battery, the anode active material including a plurality of composites that each includes a core, and a first shell layer surrounding the core, and a second shell layer surrounding the plurality of composites. The composites may each include metal particles and carbon, and a distance between adjacent composites among the composites may be in a range of 80 nanometers (nm) to 300 nm.

According to another aspect, there is provided a lithium secondary battery including the anode active material.

According to another aspect, there is provided a method of preparing the anode active material, the method including step S 1 of pulverizing a mixture including silicon, step S2 of preparing a silicon precursor by spray-drying the mixture, primary complexation step S3 of preparing a composite using silicon precursor powder, an amorphous carbon precursor, and crystalline carbon, and secondary complexation step S4 of preparing an anode active material using the composite and a carbon precursor.

Additional aspects of embodiments will be set forth in part in the description which follows and, in part, will be apparent from the description, or may be learned by practice of the disclosure.

According to embodiments, an anode active material for a lithium secondary battery may have a structure including a plurality of shells surrounding a core and provide an optimized distance between composites, and thus, it is possible to prevent a sharp decrease in performance of a battery and an occurrence of a structural collapse due to a volumetric expansion of the anode active material, and possible to manufacture a lithium secondary battery having a long lifespan.

It should be understood that the effects of the present disclosure are not limited to the above-described effects, but are construed as including all effects that can be inferred from the configurations and features described in the following description or claims of the present disclosure.

BRIEF DESCRIPTION OF THE DRAWINGS

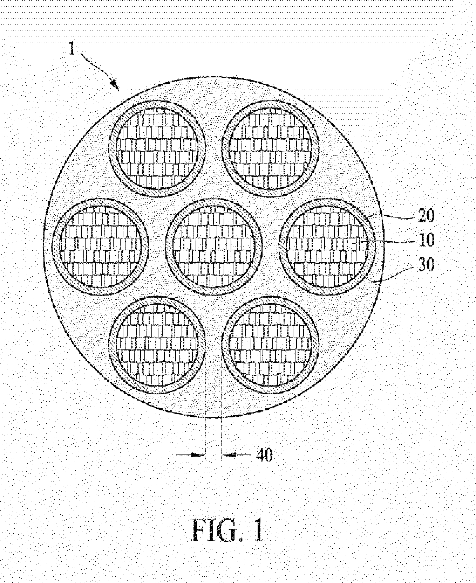

FIG. 1 is a cross-sectional view of an anode active material for a lithium secondary battery according to an embodiment; and
FIG. 2 illustrates a capacity retention rate of a lithium secondary battery according to an embodiment.

DETAILED DESCRIPTION

Hereinafter, embodiments will be described in detail with reference to the accompanying drawings. However, various alterations and modifications may be made to the embodiments. Here, the embodiments are not construed as limited to the disclosure. The embodiments should be understood to include all changes, equivalents, and replacements within the idea and the technical scope of the disclosure.

The terminology used herein is for the purpose of describing particular embodiments only and is not to be limiting of the embodiments. The singular forms "a", "an", and "the" are intended to include the plural forms as well, unless the context clearly indicates otherwise. It will be further understood that the terms "comprises/comprising" and/or "includes/including" when used herein, specify the presence of stated features, integers, steps, operations, elements, and/or components, but do not preclude the presence or addition of one or more other features, integers, steps, operations, elements, components and/or groups thereof.

Unless otherwise defined, all terms including technical and scientific terms used herein have the same meaning as commonly understood by one of ordinary skill in the art to which the embodiments belong. It will be further understood that terms, such as those defined in commonly-used dictionaries, should be interpreted as having a meaning that is consistent with their meaning in the context of the relevant art and will not be interpreted in an idealized or overly formal sense unless expressly so defined herein.

When describing the embodiments with reference to the accompanying drawings, like reference numerals refer to like components and a repeated description related thereto will be omitted. In the description of embodiments, detailed description of well-known related structures or functions will be omitted when it is deemed that such description will cause ambiguous interpretation of the present disclosure.

In addition, the terms first, second, A, B, (a), and (b) may be used to describe components of the embodiments. These terms are used only for the purpose of discriminating one component from another component, and the nature, the sequences, or the orders of the components are not limited by the terms.

A component, which has the same common function as a component included in any one embodiment, will be described by using the same name in other embodiments. Unless disclosed to the contrary, the description of any one embodiment may be applied to other embodiments, and the specific description of the repeated configuration will be omitted.

In the present specification, when one part "includes" one component, this indicates that the part may further include another component instead of excluding another component.

In the present specification, a "distance between adjacent composites" may be a shortest distance from an outermost surface of one composite to an outermost surface of another composite.

According to an embodiment, an anode active material for a lithium secondary battery may be provided. The anode active material may include a plurality of composites that each includes a core and a first shell layer surrounding the core, and a second shell layer surrounding the plurality of composites. Here, the composites may each include metal particles and carbon, and a distance between adjacent composites among the composites may be in a range of 80 nanometers (nm) to 300 nm, desirably in a range of 100 nm to 150 nm. When the distance between the adjacent composites is less than 80 nm, structures of the composites may collapse during a volumetric expansion of silicon. When a material forming a shell layer is put such that the between the adjacent composites exceeds 300 nm during preparation of an anode active material, anode active materials may aggregate together due to an increase in the amount of petroleum-based pitch, which is an amorphous carbon precursor, and accordingly, it may be difficult to control the shape and size of the anode active materials. When an electrode plate is manufactured using the above anode active material, it may be difficult to evaluate a battery due to a high probability that defects occur in the manufacturing of the electrode plate.

The distance between the adjacent composites may be uniform within the range described above. When the distance between the adjacent composites is not uniform and is varied beyond the above range, structures of composites may collapse due to a volumetric expansion of silicon in a portion in which the composites are close to each other, which may cause the entire structure of the anode active material to collapse. Thus, the lifespan of the lithium secondary battery may be shortened.

In an embodiment, the second shell layer may include at least one of crystalline carbon and amorphous carbon. The second shell layer may function to protect a structure of a composite and to electrically connect composites.

In an example, the crystalline carbon may include graphite-based carbon. The graphite-based carbon may be natural graphite that is naturally produced and mined, and artificial graphite (e.g., synthetic or pyrolytic graphite) prepared by performing heat treatment on coal-based pitch and petroleum-based pitch.

The amorphous carbon may be prepared from a material, for example, sucrose, phenol, naphthalene, a polyvinyl alcohol resin, a furfuryl alcohol resin, a polyacrylonitrile resin, a styrene resin, a polyimide resin, epoxy, a vinyl chloride resin, petroleum-based pitch, coal-based pitch, polyvinyl chloride, mesophase pitch, and tar. However, embodiments are not limited thereto.

In an embodiment, a strength of the second shell layer may be greater than a strength of the first shell layer. When a carbon precursor, which has a softening point greater than that of a carbon precursor added during preparation of the first shell layer, is added during preparation of the second shell layer, an occurrence of a problem caused by easy softening due to heat and stress generated during a complexation process may be prevented, a volatile content removed during a subsequent heat treatment process may decrease, and the second shell layer having a strength greater than that of the first shell layer may be formed. For example, the carbon precursor added during the preparation of the first shell layer may have a softening point of 100°C or greater and less than 200°C, and the carbon precursor added during the preparation of the second shell layer may have a softening point of 200°C to 300°C. Due to a high strength of the second shell layer, the structure of the anode active material may be maintained despite an expansion of the composites.

In an embodiment, the core may include metal particles and a carbon linkage between the metal particles. The carbon linkage may include at least one of crystalline carbon and amorphous carbon. Examples of the crystalline carbon and amorphous carbon are the same as the examples described above.

Due to the carbon linkage, a contact resistance between particles may decrease when electrons move, and as a result, an electrical conductivity may be enhanced and good output characteristics and charging rate may be obtained. In addition, as bonding between silicon particles is strengthened, a stable electrochemical reaction may be enabled and an electrical conduction path of metal particles may be maintained even during continuous charging and discharging of a lithium secondary battery. As a result, lifespan characteristics (long lifespan) of the lithium secondary battery may be improved.

In an embodiment, the core may be porous. Voids in the core may provide a space that allows a single silicon particle to expand during charging and discharging. In an example, the core may have a porosity of 20 to 30%. When the porosity is less than 20%, a structural collapse of the first shell layer may occur due to a volumetric expansion of an active material, which may result in a decrease in lifespan characteristics of a secondary battery including the active material. When the porosity exceeds 30%, a durability of the core may decrease, and a structure of the core may be destroyed by stress during a complexation process, which may lead to a formation of an anode active material in which a boundary between a core and a shell is unclear. In addition, an electrical conductivity of the active material and an initial efficiency may decrease.

In an embodiment, the core may have a diameter of 800 nm to 1200 nm.

In an embodiment, the metal particles may include at least one of silicon, magnesium, aluminum, calcium, iron, manganese, cobalt, nickel, zinc, germanium, tin, lead, oxides thereof, and alloys thereof. In an example, the metal particles may be scaly silicon. Silicon has advantages of having an energy density about 10 times greater than that of graphite and having higher charge/discharge rates.

In an embodiment, the metal particles may have a diameter of 20 nm to 120 nm. For example, when a metal has a major diameter and a minor diameter, such as in a scaly structure, the major diameter and the minor diameter may be in a range of 80 nm to 120 nm and a range of 20 nm to 60 nm, respectively. However, embodiments are not limited thereto.

In an embodiment, the first shell layer may include at least one of crystalline carbon and amorphous carbon. Examples of the crystalline carbon and amorphous carbon are the same as the examples described above.

In an embodiment, the first shell layer may have a thickness of 100 nm to 150 nm. When the thickness of the first shell layer is less than 100 nm, a shell may easily collapse, which may result in a decrease in lifespan characteristics of a battery. When a material forming a shell layer is put such that the thickness of the first shell layer exceeds 150 nm, a single shell layer surrounding a plurality of cores may be formed, and accordingly, it may be impossible to prepare an anode active material having a structure desired by the present disclosure. Due to the above structure, it may be difficult to maintain performance of a battery for a relatively long period of time in comparison to an anode active material including a plurality of shells.

According to an embodiment, a lithium secondary battery including the anode active material described above may be provided.

The lithium secondary battery may include a cathode, an anode, an electrolyte, and a separator.

The cathode, which is a source of lithium ions, may include a substrate, a cathode active material, a conductive material, and a binder. As the cathode active material, a compound such as a lithium oxide may be used.

The anode may include a substrate, an anode active material, a conductive material, and a binder. The anode active material may store or release lithium ions from the cathode to allow current to flow.

The separator may function to block a physical contact between the anode and the cathode, and may include micropores through which lithium ions pass. The electrolyte may be used as a medium that allows lithium ions to move, and a non-aqueous electrolyte, a solid electrolyte, and the like may be used.

According to an embodiment, a method of preparing an anode active material for a lithium secondary battery may be provided. The method of preparing the anode active material for the lithium secondary battery may include step S1 of pulverizing a mixture including silicon, step S2 of preparing a silicon precursor by spray-drying the mixture, primary complexation step S3 of preparing a composite using silicon precursor powder, an amorphous carbon precursor, and crystalline carbon, and secondary complexation step S4 of preparing an anode active material using the composite and a carbon precursor. Hereinafter, steps S1 to S4 are described in detail.

In step S1, a mixture including silicon, alcohol, and an additive may be added to a bead mill, to prepare a solution obtained by pulverizing the mixture such that a median particle size D(50) may be in a range of 80 nm to 120 nm.

In step S2, the solution may be spray-dried at a temperature of 50°C to 60°C based on a discharge temperature, to prepare silicon precursor powder with a median particle size of 1 $\mu$m.

In step S3, complexation of the silicon precursor powder, the amorphous carbon precursor, and the crystalline carbon may be performed at a ratio of 1 : 1 : 1 for 10 minutes, to prepare a material having a core-shell structure. For example, pitch-based carbon having a softening point of 100°C or greater and less than 200°C may be used as the amorphous carbon precursor, and graphite may be used as the crystalline carbon. Subsequently, a composite may be formed by performing heat treatment of the material having the core-shell structure at a temperature of 800 to 1000°C.

In step S4, the composite and the carbon precursor may be mixed at a weight ratio of greater than 1 : 0.4 to less than 1 : 0.7, complexation may be performed for 10 minutes, and heat treatment may be performed at a temperature of 800 to 1000°C, to prepare the anode active material. When the composite and the carbon precursor are mixed at the above weight ratio, a distance between adjacent composites in the anode active material may be uniform, for example, in a range of 80 nm to 300 nm, desirably a range of 100 nm to 150 nm. Here, the carbon precursor may be a crystalline carbon precursor or an amorphous carbon precursor. A softening point of the carbon precursor used in step S4 may be higher than a softening point of the carbon precursor used in step S3. Thus, a second shell layer having a strength greater than that of a first shell layer may be formed.

Experimental Example 1: Preparation of Anode Active Material for Lithium Secondary Battery

Anode active materials for lithium secondary batteries in Example 1 and Comparative Examples 1 to 5 were prepared. Here, a distance between composites was analyzed by scanning electron microscopy (SEM) after cutting a cross section of a composite using a focused ion beam (FIB).

Example 1

An anode active material for a lithium secondary battery, which includes a core, a first shell layer, and a second shell layer and in which a distance between adjacent composites is in a range of 100 nm or greater and 150 nm or less, was prepared through the following method.

Silicon with a purity of 99.5% or greater, pulverized to a median particle size D(50) of 8 $\mu$m, isopropyl alcohol, and an additive were put into a bead mill at a weight ratio of 1 : 15 : 0.5, and pulverized to 90nm based on the median particle size D(50). Subsequently, the pulverized solution was spray-dried, to prepare silicon precursor powder with D(50) of 1 $\mu$m.

Subsequently, the silicon precursor powder, petroleum-based pitch having a softening point of 150°C, and graphite (with a purity 99.9% or greater and a particle size of 200 mesh or greater) were put into a complexer (manufactured by Hansol Chemical) at a weight ratio of 1 : 1 : 1, and primary complexation was performed for 10 minutes. Subsequently, heat treatment was performed at 900°C, to prepare a composite.

Next, the composite and petroleum-based pitch having a softening point of 250°C were put into the complexer at a weight ratio of 1 : 0.55, secondary complexation was performed for 10 minutes, and heat treatment was then performed at 900°C, to prepare an anode active material.

Comparative Example 1

An anode active material, which includes a core, a first shell layer, and a second shell layer and in which a distance between adjacent composites is less than 80 nm, was prepared in the same manner as in Example 1, except that the composite and the petroleum-based pitch having the softening point of 250°C were put at a weight ratio of 1 : 0.4 during the secondary complexation.

Comparative Example 2

An anode active material, which includes a core and a first shell layer only, was prepared in the same manner as in Example 1, except that the composite and the petroleum-based pitch having the softening point of 250°C were put at a weight ratio of 1 : 0.2 during the secondary complexation.

Comparative Example 3

An anode active material, which includes a core, a first shell layer, and a second shell layer and in which a distance between adjacent composites is greater than 300 nm, was prepared in the same manner as in Example 1, except that the composite and the petroleum-based pitch having the softening point of 250°C were put at a weight ratio of 1 : 0.7 during the secondary complexation.

Comparative Example 4

Anode active materials, which have a random shape instead of a spherical shape and different sizes, were prepared in the same manner as in Example 1, except that the composite and the petroleum-based pitch having the softening point of 250°C were put at a weight ratio of 1 : 1 during the secondary complexation. Here, since the anode active materials are not in an independent state and randomly aggregate, it was difficult to measure a distance between adjacent composites.

Comparative Example 5

An anode active material, which includes a core and a second shell layer and in which a distance between adjacent composites is in a range of 100 nm to 150 nm, was prepared in the same manner as in Example 1, except that primary complexation was not performed.

Experimental Example 2: Manufacture of Lithium Secondary Battery

For electrochemical evaluation, an anode of a lithium secondary battery was prepared through the following steps. First, the anode active materials (93.5% by weight (wt%) based on the total weight of slurry) prepared in Example 1 and Comparative Examples 1 to 5, a carbon conductive material (3 wt% based on the total weight of the slurry), carboxymethyl cellulose (1.5 wt% based on the total weight of the slurry), and a styrene-butadiene binder (2 wt% based on the total weight of the slurry) were mixed, to prepare anode active material slurry. Subsequently, the slurry was applied onto a copper foil (Cu foil) current collector and dried, and then the copper foil current collector was rolled, to prepare an anode with a mass density of 1.55 g/cc.

A cathode was prepared by the following method. LiNiMnCoO$_2$ (NCM) as a cathode active material (96 wt% based on the total weight of a mixture), acetylene black as a conductive material (2 wt% based on the total weight of the mixture), and a polyvinylidene fluoride binder (2 wt% based on the total weight of the mixture) were mixed in an N-methylpyrrolidone solvent, to prepare a mixture.

In an evaluation of a full cell, the NCM as a cathode active material was used as a counter electrode, to fabricate a full cell with the prepared anode and the prepared cathode at a capacity ratio of 1 : 1. A mixed solution having a volume ratio of ethylene carbonate : diethyl carbonate of 3 : 7 was used as an electrolyte.

Experimental Example 3: Evaluation of Electrochemical Properties of Lithium Secondary Battery

To evaluate the electrochemical properties, a 2032 coin cell was used, and an expansion rate and lifespan characteristics were evaluated by a full cell.

Expansion Rate

A charging and discharging process was performed under a condition of 1C using a full cell fabricated with the anode active material. A thickness of a battery was measured in real time according to charging and discharging steps and automatically recorded, through equipment manufactured by Hansol Chemical. The expansion rate was calculated using an equation shown below.

$$Expansion\ rate\ (\%)$$
$$= \frac{Thickness\ of\ electrode\ plate\ with\ SOC\ of\ 100\%}{Thickness\ of\ electrode\ plate\ before\ charging\ and\ discharging}$$
$$\times 100$$

Expansion rates of lithium secondary batteries after "500" charge and discharge cycles are shown in Table 1 below.

[Table 1]

| Classificati on | Example 1 | Comparati ve Example 1 | Comparati ve Example 2 | Comparati ve Example 3 | Comparati ve Example 4 | Comparati ve Example 5 |
|---|---|---|---|---|---|---|
| Expansion rate (%) of Battery (500 Cyc.) | 23.7 | 27.0 | 35.4 | 29.4 | 42.2 | 35.7 |

Lifespan Characteristics

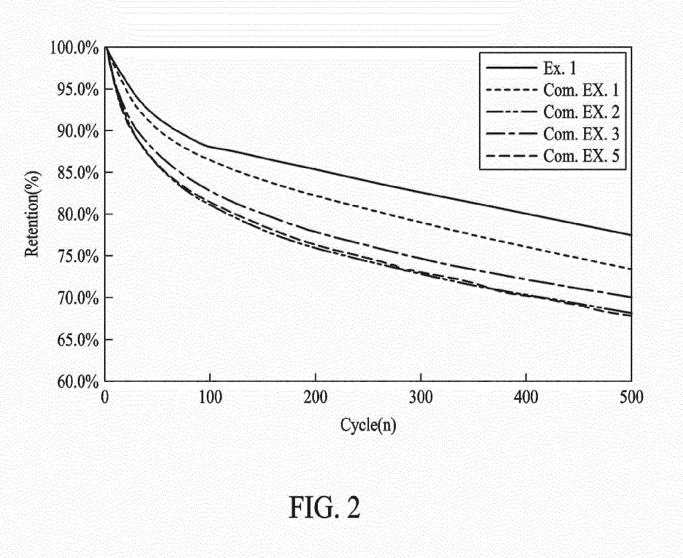

A charging and discharging process was performed under a condition of 1C using a full cell fabricated with the anode active material. Capacity retention rates of lithium secondary batteries after "500" charge and discharge cycles are shown in FIG. 2 and Table 2 below.

[Table 2]

| Classificati on | Example 1 | Comparati ve Example 1 | Comparati ve Example 2 | Comparati ve Example 3 | Comparati ve Example 4 | Comparati ve Example 5 |
|---|---|---|---|---|---|---|
| Capacity retention rate (%) of Battery (500 Cyc.) | 77.6 | 73.6 | 68.3 | 70.2 | 55.7 | 67.9 |

Based on Experimental Examples 1 to 3, it is predicted that if the anode active material for the lithium secondary battery described above is used, a lithium secondary battery having excellent efficiency and long lifespan characteristics may be prepared by maintaining charging and discharging performance using silicon for a relatively long period of time based on a structure of an anode active material having a plurality of shell layers, and by preventing a structural collapse from occurring due to a volumetric expansion of silicon by optimizing and equalizing a distance between composites in the anode active material.

While the embodiments are described with reference to drawings, it will be apparent to one of ordinary skill in the art that various alterations and modifications in form and details may be made in these embodiments without departing from the spirit and scope of the claims and their equivalents. For example, suitable results may be achieved if the described techniques are performed in a different order, and/or if components in a described system, architecture, device, or circuit are combined in a different manner, and/or replaced or supplemented by other components or their equivalents.

Therefore, other implementations, other embodiments, and equivalents to the claims are also within the scope of the following claims.

EXPLANATION OF REFERENCE NUMERALS

1: Anode active material for lithium secondary battery
10: Core
20: First shell layer
30: Second shell layer
40: Distance between adjacent composites

**Claims**

1. An anode active material for a lithium secondary battery, the anode active material comprising:

   a plurality of composites, each including a core, and a first shell layer surrounding the core; and
   a second shell layer surrounding the plurality of composites,
   wherein the composites each comprise metal particles and carbon, and
   wherein a distance between adjacent composites among the composites is in a range of 80 nanometers (nm) to 300 nm.

2. The anode active material of claim 1, wherein the distance between the adjacent composites is in a range of 100 nm to 150 nm.

3. The anode active material of claim 1, wherein the second shell layer comprises at least one selected from a group consisting of crystalline carbon and amorphous carbon.

4. The anode active material of claim 1, wherein a strength of the second shell layer is greater than a strength of the first shell layer.

5. The anode active material of claim 1, wherein the core comprises metal particles, and a carbon linkage between the metal particles.

6. The anode active material of claim 5, wherein the carbon linkage comprises at least one selected from a group consisting of crystalline carbon and amorphous carbon.

7. The anode active material of claim 1, wherein the core has a diameter of 800 nm to 1200 nm.

8. The anode active material of claim 1, wherein the metal particles comprise at least one selected from a group consisting of silicon, magnesium, aluminum, calcium, iron, manganese, cobalt, nickel, zinc, germanium, tin, lead, oxides thereof, and alloys thereof.

9. The anode active material of claim 1, wherein the metal particles have a diameter of 20 nm to 120 nm.

10. The anode active material of claim 1, wherein the first shell layer comprises at least one selected from a group consisting of crystalline carbon and amorphous carbon.

11. The anode active material of claim 1, wherein the first shell layer has a thickness of 100 nm to 150 nm.

12. The anode active material of claim 6, wherein the crystalline carbon comprises graphite-based carbon.

13. The anode active material of claim 6, wherein the amorphous carbon is prepared from at least one selected from a group consisting of sucrose, phenol, naphthalene, a polyvinyl alcohol resin, a furfuryl alcohol resin, a polyacrylonitrile resin, a styrene resin, a polyimide resin, epoxy, a vinyl chloride resin, petroleum-based pitch, coal-based pitch, polyvinyl chloride, mesophase pitch, and tar.

**14.** A method of preparing the anode active material of claim 1, the method comprising:

> step S1 of pulverizing a mixture comprising silicon;
> step S2 of preparing a silicon precursor by spray-drying the mixture;
> primary complexation step S3 of preparing a composite using silicon precursor powder, an amorphous carbon precursor, and crystalline carbon; and
> secondary complexation step S4 of preparing an anode active material using the composite and a carbon precursor.

**15.** The method of claim 14, wherein a weight ratio of the composite : the carbon precursor is greater than 1 : 0.4 and less than 1 : 0.7 in step S4.

FIG. 1

FIG. 2

Europäisches
Patentamt

European
Patent Office

Office européen
des brevets

## EUROPEAN SEARCH REPORT

Application Number

EP 23 21 1854

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 107 994 217 B (UNIV GUANGDONG TECHNOLOGY) 19 May 2020 (2020-05-19) | 1-4,7-13 | INV. H01M4/133 |
| A | * example 1 * | 5,6,14, 15 | H01M4/134 H01M4/36 H01M4/38 |
| A | US 2019/233294 A1 (MOON JONGSEOK [KR] ET AL) 1 August 2019 (2019-08-01) * the whole document * | 1-15 | H01M4/40 H01M4/42 H01M4/46 H01M4/587 |

**TECHNICAL FIELDS SEARCHED (IPC)**

H01M

The present search report has been drawn up for all claims

| Place of search | Date of completion of the search | Examiner |
|---|---|---|
| Munich | 16 July 2024 | Meini, Stefano |

EPO FORM 1503 03.82 (P04C01)

## ANNEX TO THE EUROPEAN SEARCH REPORT
## ON EUROPEAN PATENT APPLICATION NO.

EP 23 21 1854

This annex lists the patent family members relating to the patent documents cited in the above-mentioned European search report.
The members are as contained in the European Patent Office EDP file on
The European Patent Office is in no way liable for these particulars which are merely given for the purpose of information.

16-07-2024

| Patent document cited in search report | | Publication date | Patent family member(s) | | Publication date |
|---|---|---|---|---|---|
| CN 107994217 | B | 19-05-2020 | NONE | | |
| US 2019233294 | A1 | 01-08-2019 | CN 110085856 | A | 02-08-2019 |
| | | | EP 3518328 | A1 | 31-07-2019 |
| | | | US 2019233294 | A1 | 01-08-2019 |

**EP 4 425 603 A1**

**Patent documents cited in the description**

- KR 1020220159267